# EUROPEAN PATENT SPECIFICATION

(11) **EP 3 321 483 B1**
(45) Date of publication and mention of the grant of the patent: **10.07.2019**
(21) Application number: 16198377.0
(22) Date of filing: 11.11.2016
(51) Int. Cl.: F01N 3/20, F01N 3/08

(54) **DIESEL EXHAUST FLUID INJECTOR**
DIESELABGASFLÜSSIGKEITSINJEKTOR
INJECTEUR DE FLUIDE D'ÉCHAPPEMENT DIESEL

(43) Date of publication of application: 16.05.2018
(73) Proprietor: Perkins Engines Company Limited, Cambridgeshire PE1 5FQ (GB)
(72) Inventor: MOORE, David, Oundle, Northamptonshire PE8 4HS (GB)
(74) Representative: BRP Renaud & Partner mbB Rechtsanwälte Patentanwälte Steuerberater

(56) References cited:
- WO-A1-97/39226
- WO-A1-2016/068878
- US-A1- 2014 050 644

## Description

### Technical field

This disclosure relates to after-treatment apparatus for an internal combustion engine. In particular, this disclosure relates to a diesel exhaust fluid injector for use in an after-treatment apparatus of a diesel engine.

### Background

Combustion of fuel in the combustion chambers of engines may produce particulate matter such as soot and nitrogen oxide (NOₓ) emissions which are expelled from engine as part of the exhaust gas. An after-treatment apparatus can be provided to remove particulate matter from the exhaust gas. In particular, a selective catalytic reduction (SCR) apparatus can be included in an after-treatment apparatus for removing NOₓ emissions from exhaust gas.

In a known SCR apparatus, the NOₓ emissions are removed from the exhaust gas by a reduction reaction occurring at a catalyst provided in a SCR chamber as part of the after-treatment apparatus. In order for the reduction reaction to occur, a reactant may be mixed with the exhaust gas upstream of the SCR chamber in the after-treatment apparatus. In an SCR apparatus for a diesel engine, the reactant may be provided as a fluid, for example a Diesel Exhaust Fluid (DEF). The DEF is injected into the exhaust gas by a DEF injector provided as part of the after-treatment apparatus. Typically, a urea-based DEF solution consisting of urea and water is used.

When injecting DEF into an after-treatment apparatus, it is desirable for the DEF to be thoroughly mixed with the exhaust gas. One reason it is desirable to thoroughly mix DEF with the exhaust gas is to prevent the formation of deposits around the DEF injector or surrounding structures. The formation of deposits can lead to injector clogging, poor mixing of the DEF and exhaust gas and even blocking of the SCR apparatus downstream.

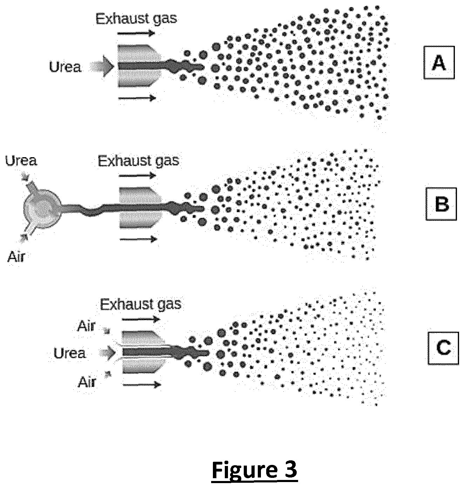

One known method of providing thorough mixing of DEF with exhaust gas is to use a high pressure pump of typically around 9 bar to spray DEF through a nozzle into the exhaust gas stream such that the DEF disperses into small droplets and thoroughly mixes with the exhaust gas stream. Conventionally, this process is known as atomising the DEF. Mixing shrouds can be placed around the DEF injector to further increase DEF atomisation as the DEF is injected into the exhaust gas stream. In some applications, DEF atomisation can be increased by mixing the DEF supply with compressed air prior to injection into an after-treatment apparatus. Examples of these known methods of atomising urea containing DEF for injection into exhaust gas are shown in Figure 3. Additionally, it is known to provide mechanical mixing features downstream of the DEF injector to further increase droplet atomisation by disrupting fluid flow through the after-treatment apparatus through impaction and increased turbulence mixing. Thus, the present inventors have identified a need for a DEF injector for an after-treatment apparatus which is simple in design and manufacture and does not rely on expensive components in order to ensure sufficient intermixing of DEF with exhaust gas.

Another known method for injecting fluid into an exhaust gas conduit upstream of a SCR apparatus is described in WO-A-2016/068878 in which a bundle of capillary tubes injects DEF into an exhaust gas mixing chamber. Also mounted in the mixing chamber is a base plate which is located on an interior surface of the chamber opposite to the outlets of the injector. A voltage is applied between the bundle of capillary tubes and the base plate such that fluid flowing from the capillary tubes becomes atomised.

The method set out in WO-A-2016/068878 utilises a voltage applied between bundle of capillary tubes and a base plate on an opposing wall of a mixing chamber to atomise a fluid. However, the present inventors have realised that DEF has a propensity to form deposits on the surfaces of the exhaust gas conduit. Thus, the present inventors have realised it is desirable to reduce deposits forming on an electrode surface to improve the atomisation of the DEF. The inventors have also realised that it is desirable to provide the electrodes in an easily accessible manner such that deposits can be easily removed. Further, directly pumping DEF into and purging DEF from the DEF injector may provide improved control over the injection/purging process, reduce accumulation of DEF on the injector and/or remove the need for injection chambers and complex valve and vacuum pump systems.

The present disclosure is directed, at least in part, to addressing one or more of the problems identified above.

### Summary of the disclosure

In a first aspect, the disclosure describes a diesel exhaust fluid (DEF) injector according to claim 1.

In a second aspect, the disclosure describes a DEF injector assembly comprising a DEF fluid injector according the first aspect; and a voltage supply connected between the first and second electrodes of the electrospraying apparatus.

In a third aspect, the disclosure describes a DEF supply apparatus comprising a DEF injector according to the first aspect, or a DEF injector assembly according the second aspect; and a pump for pumping DEF fluid from a DEF storage container/reservoir to the DEF fluid injector. The pump may be used to pump DEF into the DEF injector or purge DEF from the DEF injector.

In a fourth aspect, the disclosure describes a kit of parts for retrofitting a DEF injector according to the first aspect, a DEF injector assembly according to the second aspect, or a DEF supply apparatus according to the third aspect upstream of a selective catalytic reduction device in a diesel engine. The kit may comprise the electrospraying apparatus integrated with the DEF injector and as such may be installed as a single device.

In a fifth aspect, the disclosure describes a method for injecting diesel exhaust fluid (DEF) according to claim 11.

### Brief Description of the Drawings

An embodiment of the disclosure will now be described, by way of example only, with reference to the accompanying drawings in which:
Figure 1 shows a sectional view of a DEF injector attached to an outer wall of an after-treatment apparatus
Figure 2 shows a schematic view of the electrospraying apparatus of the DEF injector connected to a voltage supply.
Figure 3 shows examples of known methods of atomising DEF using a high pressure pump.
Figure 4A shows a schematic drawing of a known DEF injector including mechanical mixing features in an after-treatment apparatus.
Figure 4B shows a schematic drawing of a DEF injector according to this disclosure installed in an after-treatment apparatus.

### Detailed Description

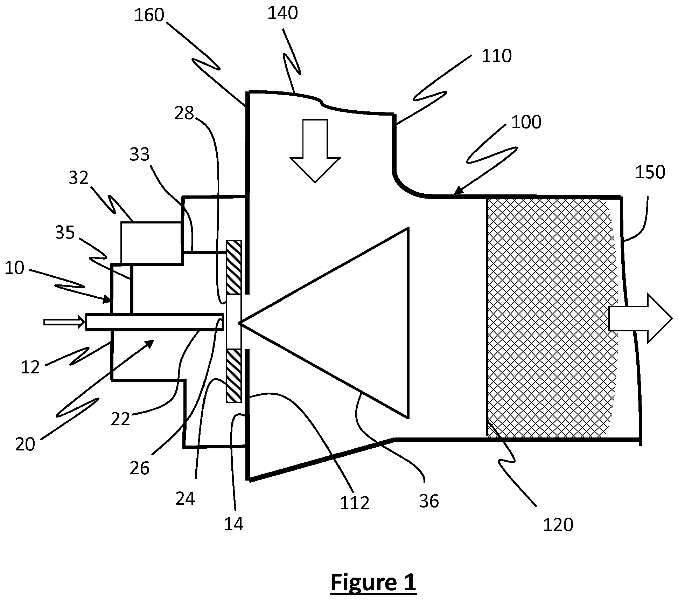

An embodiment of a DEF injector 10 according to this disclosure is shown in Figure 1. Figure 1 shows a DEF injector 10 attached to an after-treatment apparatus 100 comprising an exhaust gas conduit 110 and an SCR apparatus 120. Exhaust gas conduit 110 defines an exhaust gas flow path for exhaust gas output from a diesel engine through the after-treatment apparatus 100. As shown in Figure 1, exhaust gas flows from an upstream region 140 of the exhaust gas conduit 110, through the SCR apparatus 120 to a downstream region 150 of exhaust gas conduit 110.

The DEF injector 10 as illustrated in Figure 1 is attached to an outer wall 160 of the exhaust gas conduit 110. The DEF injector 10 is attached to the outer wall 160 of the exhaust gas conduit 110 at a location upstream from the SCR apparatus 120. The DEF injector 10 may be attached to the outer wall 160 by at least one fastener. In some embodiments, the outer wall 160 may include at least one threaded bore for receiving fasteners such as bolts by which the DEF injector 10 may be fastened to the outer wall 160 of the exhaust gas conduit 110.

In an embodiment of the disclosure as illustrated in Figure 1, the DEF injector 10 comprises an electrospraying apparatus 20. The DEF injector 10 may also comprise a housing 12, the electrospraying apparatus 20 being contained substantially within the housing 12. The housing 12 may include an opening 14 through which DEF may be injected from the DEF injector 10 into the exhaust gas conduit 110 by way of a corresponding aperture 112 formed in exhaust gas conduit 110. The housing 12 may provide an enclosure for containing the electrospraying apparatus 20 such that the DEF injector 10 can be externally mounted on an outer wall of an after-treatment apparatus. Accordingly, it may not necessary to further modify or adapt the exhaust gas conduit 110 to accommodate the electrospraying apparatus 20 or other features of the DEF injector 10. In this manner the DEF injector 10 may be simple to design and manufacture as no further modifications may be required to the after-treatment apparatus 100 to accommodate the electrospraying apparatus 20.

The DEF injector 10 includes an electrospraying apparatus 20. The electrospraying apparatus 20 may be provided as part of the DEF injector 10 such that the DEF injector 10 may be a separate unit to the exhaust gas conduit 110. By providing the DEF injector 10 including electrospraying apparatus 20 as a separate unit to the exhaust gas conduit, the DEF injector 10 may be easily installed on and removed from an exhaust gas conduit 110.

The electrospraying apparatus 20 includes a first electrode which is provided by a DEF injection tube 22 and a second electrode 24, for example as shown in Fig. 1. The DEF injection tube 22 has an outlet 26 at one end, from which DEF may be injected into the exhaust gas of the after-treatment system 100 as shown in Fig. 1. The DEF injection tube 22 may act as a first electrode for DEF passing through the DEF injection tube 22 to the outlet 26. In some embodiments, the entire length of the DEF injection tube 22 is conductive, such that the whole length of the DEF injection tube 22 may act as a first electrode. In an alternative embodiment, only a part of the DEF injection tube 22 may be conductive, such that the first electrode may extend only partially along the length of the DEF injection tube 22. Preferably, the first electrode extends along a length of the DEF injection tube 22 including the outlet 26 of the DEF injection tube 22. In other embodiments, the first electrode may be disposed on a length of the DEF injection tube 22 spaced apart from the outlet 26.

By connecting the first electrode provided by the DEF injection tube 22 and the second electrode 24 to a voltage supply 32, an electric field can be provided between the first and second electrodes. By providing a suitable electric field between the first and second electrodes, the DEF injection tube 22 and the second electrode 24 can be used to provide an electrospraying apparatus 20 for atomising DEF. The properties of the electrospraying 20 apparatus will be discussed in more detail later.

The second electrode 24 of the electrospray assembly 20 is provided spaced apart from the outlet 26 of the DEF injection tube 22. The second electrode 24 may be spaced apart from the outlet 26 by an electrode spacing distance (gap length). The electrode spacing distance is defined by the shortest distance between a point on any part of the outer surface of the DEF injection tube 22 forming the outlet 26 and a point on the surface of the second electrode 24. Preferably, the electrode spacing distance is at least 1 mm to prevent electrical arcing from occurring. More preferably the electrode spacing distance is 1.5 mm, 2 mm, 3 mm, 5 mm or 10 mm to increase the range of operating voltage. Preferably, the electrode spacing distance is no more than 30 mm. By moving the second electrode 24 relatively close to the outlet of the DEF injection tube 22 (the first electrode) the degree of atomisation of the DEF may be improved relative to the second injection tube being spaced relatively far away (for example more than 50 mm apart).

In an embodiment as shown in Fig. 1 the second electrode 24 may comprise an internal aperture 28. The internal aperture 28 may be formed through the thickness of the second electrode 24. The internal aperture 28 may be generally aligned with the DEF injection tube 22 such that DEF to be injected into the exhaust gas conduit 110 may be injected through the internal aperture 28 of the electrode plate. By injecting DEF through the internal aperture 28 of the second electrode 24, DEF may be prevented from collecting on the second electrode 24 when in use, thus reducing the formation of deposits on the second electrode 24.

The outlet of the DEF injection tube 22 may define a central axis aligned with the direction of DEF flow through the outlet 26. In some embodiments, the electrode spacing distance (gap length) may have a component aligned with this central axis, such that the second electrode 24 may be longitudinally spaced apart from the outlet by a longitudinal electrode spacing distance. In some embodiments, the longitudinal electrode spacing distance may be at least 0 mm, 0.5 mm, 1 mm, 2 mm, 5 mm or 10 mm, in order to increase the length of the DEF flow path that is subjected to the electric field between the first and second electrodes when in use. In some embodiments, the longitudinal electrode spacing distance may be at most 30 mm, 25 mm, 20 mm, or 15 mm as the atomisation of the DEF may be improved by reducing the longitudinal electrode spacing distance between the first and second electrodes. Further, by reducing the longitudinal electrode spacing distance and injecting the DEF through the internal aperture 28 of the second electrode 24, the second electrode 24 may not be impacted by the DEF plume 36 (described in more detail below in the context of operation of the injector), thus reducing the formation of deposits on the second electrode 24.

In an embodiment as shown in Fig.1, a central axis of the internal aperture 28 may be aligned with the central axis of the outlet 26. Thus, the electrode spacing distance (gap length) may have a component in a radial direction about the central axis of the outlet such that the second electrode 24 may be radially spaced apart from the outlet 26 by a radial electrode spacing distance. In some embodiments, the radial electrode spacing distance may be at least 1 mm, 1.5 mm, 2 mm, 2.5 mm, 3 mm or 5 mm, in order to provide a sufficiently wide internal aperture 28 through which DEF can be injected without the DEF plume 36 impacting the second electrode 24. In some embodiments, the radial electrode spacing distance may be at most 30 mm, 25 mm, 20 mm, or 15 mm such that the threshold voltage required to generate an electrospray effect is reduced.

In some embodiments, the second electrode 24 may only be radially spaced from the DEF injection tube 22. As such, a longitudinal electrode spacing distance may be 0 mm, while the radial electrode spacing distance may be greater than 1 mm. As such, the outlet 26 of the DEF injection tube 22 may be provided within the internal aperture 28 of the second electrode 24. By reducing the longitudinal electrode spacing in this manner, a more compact electrospraying assembly 20 can be provided which provides more stable and suitable atomisation of DEF.

In an embodiment as shown in Fig. 1, the second electrode 24 may be provided as a disc-shaped electrode 24 with a substantially circular internal aperture 28. In some embodiments, the internal aperture 28 may be elliptical. In some embodiments, the second electrode 24 may be annular.

In some embodiments, an injector mount plate (not shown) may be included between the DEF injector 10 and the exhaust gas conduit 110 to provide a suitable mounting interface between the DEF injector 10 and the exhaust gas conduit 110. For example, in some embodiments, the DEF injector 10 may be provided on a curved section of the exhaust gas conduit such 110.

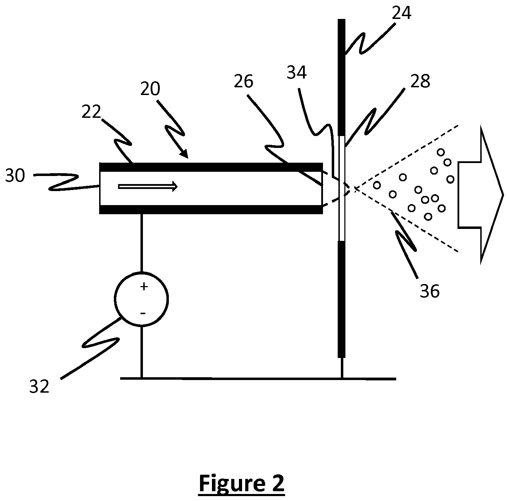

The operation of the electrospraying apparatus 20 will now be described with reference to Fig. 2. In use, DEF may be pumped into the DEF injection tube 22 at an inlet 30. DEF may flow along the DEF injection tube 22 and out through outlet 26. A voltage may be provided by a voltage supply 32 between the DEF injection tube 22 (first electrode) and the second electrode 24 such that DEF becomes electrically charged. DEF flowing through outlet 26 may be subjected to an electric field formed between the first and second electrodes. By applying a voltage between the first and second electrodes above a threshold voltage, the DEF can be made to form a Taylor cone 34 as it flows out of the outlet due to a combination of electrostatic forces, surface tension and hydrodynamic forces. At the apex of the resulting Taylor cone, the flow of electrostatically charged DEF may be radially dispersed due to Coulombic repulsion resulting in a DEF plume 36 of highly atomised DEF being formed. In this context, atomisation of DEF is taken to mean that relatively small droplets of DEF are formed which are suitable for mixing with exhaust gas. As such small droplets with sizes down to a molecular (atomic) scale may be formed by atomising the DEF. However, it is understood in the art that atomisation rarely, if at all, results in droplets of molecular (atomic) sizes being formed, and rather refers to the formation of a fine distribution of relatively small droplets.

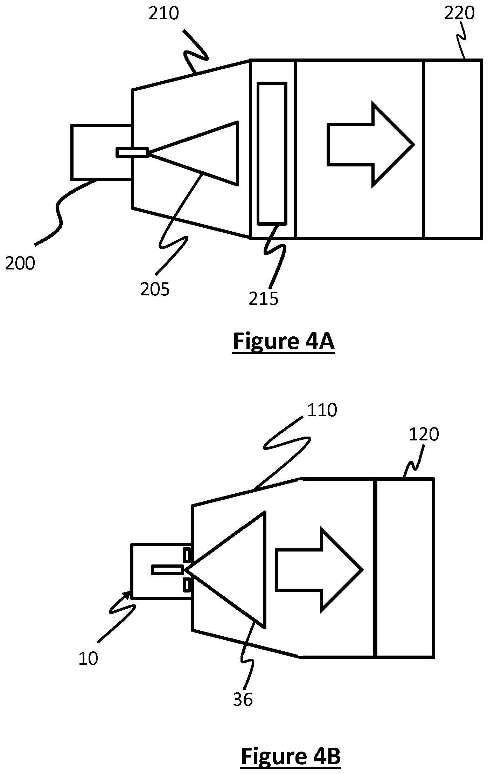

Advantageously, the atomisation of DEF provided by the DEF injector 10 according to this disclosure may reduce the mixing length required to ensure thorough mixing of the DEF and exhaust gas in the exhaust gas conduit 110. The DEF injector 10 according to this disclosure may also produce a DEF plume 36 with a relatively large included angle, thus further reducing the mixing length required to ensure thorough mixing of the DEF in the exhaust gas conduit 110. Accordingly, in an after-treatment apparatus incorporating the DEF injector 10 of this disclosure, the length of exhaust gas conduit 110 required between the DEF injector 10 and the SCR apparatus 120 can be reduced. Further, due to the atomisation provided by the DEF injector 10 of this disclosure, there may be no requirement to provide mechanical mixing features downstream of the DEF injector 10 as shown Figures 4A and 4B. Figure 4A shows a known DEF injector 200 which injects a high pressure DEF spray 205 into an exhaust gas conduit 210 upstream of mechanical mixing features 215 to ensure that the DEF is atomised and mixed with the exhaust gas prior to flowing through an SCR apparatus 220. Figure 4B shows a schematic of a DEF injector 10 according to this disclosure in which the mixing length of the plume 36 of DEF is reduced and mechanical mixing features are not provided. Accordingly the total length of exhaust gas conduit 110 provided between the DEF injector 10 and the SCR catalyst may be reduced compared to the known DEF injector 200 in Figure 4A.

Advantageously, the atomisation of the DEF provided by the DEF injector 10 may result in superior dispersion of DEF when injected into exhaust gas in an exhaust gas conduit 110. As a result, the rate of DEF usage by a DEF injector 10 according to this disclosure may be reduced compared to the known methods of DEF injection as shown in Figure 3.

The risk of deposits forming in the DEF injector 10, exhaust gas conduit 110 or SCR apparatus 120 may also be reduced due to the increased atomisation provided by the DEF injector 10 of this disclosure.

Advantageously, by providing the electrospraying apparatus 20 as part of the DEF injector 10 which is configured to be attached to an outer wall 160 of an exhaust gas conduit 110, the DEF injection tube 22 forming the first electrode and the second electrode 24 of the electrospraying apparatus may be easily accessible. Thus, in a case where deposits may build up over time on the first electrode or the second electrode 24, the first and second electrodes may be easily accessible for cleaning and/or replacement.

Advantageously, the DEF injector 10 according to this disclosure may atomise DEF without requiring a high pressure pump, such as a pump providing pressures in excess of 6 bar. In particular, the atomisation provided by the DEF injector 10 of this disclosure may be sufficient to ensure that DEF mixes thoroughly with the exhaust gas for use in the SCR apparatus 120 without further atomisation increasing means. Similarly, it may not be necessary to provide a high pressure pump or a separate source of compressed air for further increasing the atomisation of the DEF. Thus, a DEF injector 10 according to this disclosure may be provided which has a simple, single unit design, is simple to manufacture and has lower overall unit assembly costs.

In some embodiments the outlet 26 of the DEF injection tube 22 may be shaped to further enhance the performance of the plume 36. As such the outlet 26 of the DEF injection tube 22 may be provided as a nozzle configured to provide a wide spray angle for DEF injected through the nozzle. The outlet 26 of the DEF injection tube 22 may also be provided as a nozzle configured to improve the atomisation of the DEF injected into the exhaust gas. By providing the DEF injection tube 22 with a nozzle as the outlet 26, the plume 36 of DEF injected into the exhaust gas conduit 110 can be injected over a larger area, thus further reducing the mixing length of the DEF injector 10 and increasing uniformity of mixture.

In some embodiments, a relatively internal large diameter of the DEF injection tube 22 and a relatively large diameter of the outlet 26 may be provided compared to DEF injectors known in the art as shown in Figure 3, as the electrospraying apparatus 20 provides the atomisation of the DEF in contrast to high pressure DEF injectors, which require fluid flow through a series of small apertures to create a spray of DEF. By providing relatively large diameter DEF flow paths, the formation of deposits or risk of crystallisation may be reduced and further the likelihood of blockages occurring in the DEF injection tube 22 or outlet 26 as a result of deposit formation may be reduced.

The DEF injected by the DEF injector 10 may be any fluid suitable for use with an SCR apparatus 120 for removing pollutants from exhaust gas. Preferably, the DEF used may include urea in an aqueous solution and/or ammonia for the removal of NOₓ by way of a catalytic reduction reaction in the SCR apparatus 120.

As shown in the embodiment of Fig. 2 the second electrode 24 may be spaced apart from the first electrode such that the electrode spacing distance (gap length) has a non-zero longitudinal electrode spacing distance component and a non-zero radial electrode spacing distance component.

Preferably, the operating conditions for the electrospray assembly take into account electrical breakdown effects according to Paschen's law in order to prevent electrical arcing occurring between the first and second electrodes when a voltage is applied. Electrical arcing occurs between the first and second electrodes when the electric field between the first and second electrode is sufficient to cause breakdown of the exhaust gas and is governed by variables including pressure, gap length and gas composition as well as electrode geometry or shape. Accordingly, an operational ratio for the electrospray can be defined as the ratio of the operating voltage to the electrode spacing distance (gap length). In some embodiments, a maximum operating ratio is 10 kV/mm to prevent electrical arcing occurring. In a more preferred embodiment, a maximum operating ratio is 7 kV/mm, 5 kV/mm, 4 kV/mm, 3 kV/mm, 2 kV/mm or 1 kV/mm such that a stable electrospray effect is provided.

According to this disclosure, a DEF injector assembly is provided. The DEF fluid injector assembly includes the DEF injector 10 and a voltage supply 32. The voltage supply 32 may be connected to the DEF supply tube 22 by a first connecting cable 35 and the voltage supply 32 may be connected to the second electrode 24 by a second connecting cable 33. The first and second connecting cables 35, 33 may be adapted to carry high voltages suitable for operation of the electrospray assembly 20. In some embodiments, the voltage supply 32 is preferably capable of providing a voltage of at least 1 kV, 2 kV, 5 kV or 10 kV as a minimum threshold voltage is required to be provided between the first electrode and the second electrode 24 in order to produce an electrospraying effect. In some embodiments, the voltage supply 32 is preferably capable of providing a voltage of up to 200 kV, 100 kV, 50 kV or 30 kV in order to achieve the desired atomisation of the DEF. In some embodiments, one of the first electrode and the second electrode 24 connected to the voltage supply 32 may be grounded. For example, in the embodiment of this disclosure shown in Figure 2, the second electrode 24 is grounded.

In some embodiments, the voltage supply 32 may be provided in situ with the DEF injector 10, as shown in Figure 1 to form a DEF injector assembly. In other embodiments, the voltage supply 32 is provided spaced apart from the DEF injector 10 and is connected by the first and second connecting cables 35, 33. The voltage supply 32 may be provided as a battery connected to a transformer means suitable for transforming the battery voltage to a high voltage output. For example, the battery may be a 12V battery, a 24V battery or any other suitable battery and the transformer means may be a spark coil or an ignition coil. Other types of battery and transformer circuits may also be used in order to provide the desired high voltage output as are known in the art.

According to this disclosure a DEF supply apparatus is provided. The DEF supply apparatus comprises a DEF injector 10 or a DEF injector assembly, and a pump for pumping DEF fluid from a DEF storage container to the DEF fluid injector 10. The DEF storage container may provide a reservoir of DEF for use in an after-treatment system 100. Pump may be provided to pump DEF from the DEF storage container to the DEF injector 10 via a suitable conduit, for example a pipe fluidly connecting the DEF storage container and pump to the DEF injection tube 22 of the DEF injector 10. In some embodiments a pump may be provided in order to provide sufficient pressure to pump DEF from the DEF storage container to the DEF injection tube 22, as it may be necessary to counteract the effects of gravity depending on the respective locations of the DEF storage container and the DEF injector 10 when installed as part of an after-treatment apparatus 100. Thus, the desired pumping pressure to be provided by a pump according to this disclosure may be significantly reduced compared to the high pressure pumps used in DEF injectors known in the art, where high pressure in excess of 6 bar is used to spray DEF into exhaust gas. Thus, a pump according to this disclosure may provide a pumping pressure in the range 0 bar to 2 bar for transporting DEF to the DEF injection tube 22.

Advantageously, the present inventors have realised that the low pressure pump may also be used to further increase the atomisation of the DEF injector 10 by increasing the pump pressure. In this scenario, a pump pressure of at least 1 bar may be provided to overcome gravitational effects provided in the pump system. More preferably, a minimum pressure of 1.1, 1.25, 1.5 or 2 bar may be provided in order to increase the atomisation of the DEF injected into the exhaust gas by providing a spraying effect in addition to the electrospray created by the application of an electric field. A maximum pump pressure of at most 5 bar may be provided as high pressure pumps in general tend to be relatively large and expensive compared to low pressure pumps.

According to this disclosure, a kit of parts for retrofitting a DEF injector 10 to an after-treatment apparatus is provided. As part of the kit of parts, a DEF injector 10, DEF injector assembly, or a DEF supply apparatus is provided for attaching to the outer wall of an after-treatment apparatus upstream of a selective catalytic reduction device in a diesel engine. Due to the nature of the DEF injector 10 being provided as a single unit, the DEF injector 10 may be suitable for replacing high pressure DEF injectors 200 in existing after-treatment systems without requiring further modifications to the exhaust gas conduit 110.

In an alternative embodiment, the DEF injection tube 22 may be formed from a plurality of tubes. As such, more than one DEF injection tube 22 may be provided, each DEF injection tube 22 electrically connected to each other DEF injection tube 22 such that the plurality of DEF injection tubes 22 form the first electrode. Preferably, the plurality of DEF injection tubes 22 may be arranged to each inject DEF through the internal aperture 28 of the second electrode 24. Alternatively, each DEF injection tube 22 may have its own respective internal aperture 28 formed in the second electrode 24 through which DEF is injected. By providing a plurality of DEF injection tubes 22, each with the same diameter, the total flow rate of DEF through the DEF injector 10 may be increased compared to a single DEF injection tube 22 of the same diameter.

### Industrial applicability

The DEF injector 10 of the disclosure may be applicable in a variety of applications.

One application may be for use in an after-treatment system as illustrated in Figure 1, where DEF is injected into an exhaust gas conduit 110 upstream of a SCR apparatus 120. In some embodiments, the exhaust gas conduit 110 may include a diesel oxidation catalyst (DOC) and/or a diesel particulate filter (DPF) located upstream of the SCR apparatus in the exhaust gas flow path. After passing through the diesel oxidation catalyst and the diesel particulate filter, the exhaust gas may pass the DEF injector 10 attached to the side wall 160 of the exhaust gas conduit 110 at which point the DEF may be injected the aperture 112 in the side wall 160. In an alternative embodiment, the DEF injector 10 may be attached to a side wall 160 of the exhaust gas conduit 110 upstream of the DPF and/or DOC. In a further embodiment, the DEF injector 10 may be upstream of a combined DPF/SCR catalyst.

## Claims

1. A diesel exhaust fluid (DEF) injector (10), the DEF injector (10) configured to attach to an outer wall (160) of an after-treatment apparatus (100) for a diesel engine upstream of a selective catalytic reduction device (120), the DEF injector (10) comprising:
an electrospraying apparatus (20) comprising:
a DEF injection tube (22) configured to provide a first electrode;
a second electrode (24) spaced from an outlet of the DEF injection tube (22),
the electrospraying apparatus (20) configured to provide an electric field between the first electrode and the second electrode (24) for atomisation of DEF injected by the DEF injector (10);
**characterised in that**
the DEF injector further comprises a housing (20),
wherein the electrospraying apparatus (20) is contained within the housing (12), and
the electrospraying apparatus (20) is provided as part of the DEF injector (10).

2. A DEF injector according to claim 1, wherein
the second electrode comprises an internal aperture aligned with the outlet of the DEF injection tube, the DEF injector configured to inject DEF through the internal aperture in the second electrode.

3. A DEF injector according to claim 2, wherein
the second electrode (22) is a plate-like electrode, and/or the second electrode (22) is a circular disc-shaped plate and/or the second electrode is annular.

4. A DEF injector according to claim 2 or claim 3, wherein
the internal aperture (28) through the second electrode is elliptical and/or the internal aperture (28) through the second electrode is a circular hole.

5. A DEF injector according to any one of the preceding claims wherein,
the electrospraying apparatus (20) is configured to provide an electric field and the second electrode (24) is spaced from the first electrode (22) such that an operational ratio of up to 5 kV/mm is provided.

6. A DEF injector according to any one of the preceding claims, wherein
the DEF injection tube (22) is formed from a plurality of tubes.

7. A DEF injector assembly comprising:
a DEF fluid injector (10) according to any one of the preceding claims; and
a voltage supply (32) connected between the first and second electrodes (22, 24) of the electrospraying apparatus (20),
wherein optionally the voltage supply(32) comprises a spark coil or ignition coil and/or the voltage supply is configured to provide a voltage of at least 2 kV and up to 200 kV between the first and second electrodes.

8. A DEF supply apparatus comprising:
a DEF injector (10) according to any one of claims 1 to 6, or a DEF injector assembly according to claim 7; and
a pump for pumping DEF fluid from a DEF storage container to the DEF fluid injector.

9. A DEF supply apparatus according to claim 8 wherein
the pump is configured to provide a DEF pressure in the range 0 to 5 bar in the DEF injection tube.

10. A kit of parts for retrofitting a DEF injector (10) according to any one of claims 1 to 6, a DEF injector assembly according to claim 7, or a DEF supply apparatus according to claim 8 or 9 upstream of a selective catalytic reduction device in a diesel engine.

11. A method for injecting diesel exhaust fluid (DEF) into an after-treatment apparatus (100) for a diesel engine upstream of a selective catalytic reduction device (120), comprising:
mounting an electrospraying apparatus (20) on an outer wall (160) of an after-treatment apparatus (20),
using at least one DEF injection tube (22) of the electrospraying apparatus to inject DEF into the after-treatment apparatus (100), wherein the at least one DEF injection tube (22) is configured as a first electrode;
generating an electrical field between the first electrode and a second electrode (24); and
injecting a spray of the DEF passing out of the at least one DEF injection tube (22) and through the electric field into a flow of exhaust gases flowing through the after-treatment apparatus (100),
wherein the DEF injector further comprises a housing (20), and
the electrospraying apparatus (20) is contained within the housing (12).

12. The method of claim 11, further comprising:
pumping the DEF from a DEF reservoir into the at least one DEF injection tube (22).

13. The method of claims 11 or 12, wherein the second electrode is coupled/integrated with or disposed proximal to the at least one DEF injection tube (22).

14. The method of any one of claims 11 through 13, wherein the first and the second electrodes (22, 24) are configured to provide that the DEF flows out of the at least one DEF injection tube (22) and through an aperture (28) in the second electrode (24).

15. The method of any one of claims 11 through 14 further comprising:
using a nozzle to shape a stream of the DEF passing out of the at least one DEF injection tube.

## Patentansprüche

1. Dieselabgasfluid-(DEF)-Injektor (10), wobei der DEF-Injektor (10) zum Anbringen an einer Außenwand (160) einer Nachbehandlungsvorrichtung (100) für einen Dieselmotor stromaufwärts einer Vorrichtung (120) für selektive katalytische Reduktion ausgestaltet ist, wobei der DEF-Injektor (10) Folgendes umfasst:
eine Elektrosprayvorrichtung (20), umfassend:
ein DEF-Einspritzrohr (22), das ausgestaltet ist, um eine erste Elektrode bereitzustellen;
eine zweite Elektrode (24), die von einem Auslass des DEF-Einspritzrohrs (22) beabstandet ist,
wobei die Elektrosprayvorrichtung (20) ausgestaltet ist, um ein elektrisches Feld zwischen der ersten Elektrode und der zweiten Elektrode (24) zum Zerstäuben von DEF bereitzustellen, das durch den DEF-Injektor (10) eingespritzt wird;
**dadurch gekennzeichnet, dass**
der DEF-Injektor ferner ein Gehäuse (20) umfasst,
wobei die Elektrosprayvorrichtung (20) innerhalb des Gehäuses (12) enthalten ist und
die Elektrosprayvorrichtung (20) als Teil des DEF-Injektors (10) bereitgestellt ist.

2. DEF-Injektor nach Anspruch 1, wobei
die zweite Elektrode eine innere Öffnung umfasst, die am Auslass des DEF-Einspritzrohrs ausgerichtet ist, wobei der DEF-Injektor zum Einspritzen von DEF durch die innere Öffnung in die zweite Elektrode ausgestaltet ist.

3. DEF-Injektor nach Anspruch 2, wobei
die zweite Elektrode (22) eine plattenförmige Elektrode ist und/oder die zweite Elektrode (22) eine kreisscheibenförmige Platte ist und/oder die zweite Elektrode ringförmig ist.

4. DEF-Injektor nach Anspruch 2 oder Anspruch 3, wobei
die innere Öffnung (28) durch die zweite Elektrode elliptisch ist und/oder die innere Öffnung (28) durch die zweite Elektrode ein kreisförmiges Loch ist.

5. DEF-Injektor nach einem der vorstehenden Ansprüche, wobei
die Elektrosprayvorrichtung (20) zur Bereitstellung eines elektrischen Feldes ausgestaltet ist und die zweite Elektrode (24) von der ersten Elektrode (22) derart beabstandet ist, dass ein Betriebsverhältnis von bis zu 5 kV/mm bereitgestellt wird.

6. DEF-Injektor nach einem der vorstehenden Ansprüche, wobei das DEF-Einspritzrohr (22) aus einer Vielzahl von Rohren gebildet ist.

7. DEF-Injektorbaugruppe, umfassend:
einen DEF-Fluidinjektor (10) nach einem der vorstehenden Ansprüche und
eine zwischen die erste und zweite Elektrode (22, 24) der Elektrosprayvorrichtung (20) geschaltete Spannungsversorgung (32),
wobei wahlweise die Spannungsversorgung (32) eine Funkenspule oder Zündspule umfasst und/oder die Spannungsversorgung dazu ausgestaltet ist, eine Spannung zwischen der ersten und der zweiten Elektrode von mindestens 2 kV und bis zu 200 kV bereitzustellen.

8. DEF-Zufuhrvorrichtung, umfassend:
einen DEF-Injektor (10) nach einem der Ansprüche 1 bis 6 oder eine DEF-Injektorbaugruppe nach Anspruch 7 und
eine Pumpe zum Pumpen von DEF-Fluid aus einem DEF-Speicherbehälter in den DEF-Fluidinjektor.

9. DEF-Zufuhrvorrichtung nach Anspruch 8, wobei
die Pumpe dazu ausgestaltet ist, im DEF-Einspritzrohr einen DEF-Druck im Bereich von 0 bis 5 bar bereitzustellen.

10. Kit von Teilen zum Nachrüsten eines DEF-Injektors (10) nach einem der Ansprüche 1 bis 6, einer DEF-Injektorbaugruppe nach Anspruch 7 oder einer DEF-Zufuhrvorrichtung nach einem der Ansprüche 8 oder 9 stromaufwärts einer Vorrichtung zur selektiven katalytischen Reduktion in einem Dieselmotor.

11. Verfahren zum Einspritzen von Dieselabgasfluid (DEF) in eine Nachbehandlungsvorrichtung (100) für einen Dieselmotor stromaufwärts einer Vorrichtung (120) zur selektiven katalytischen Reduktion, umfassend:
Anbringen einer Elektrosprayvorrichtung (20) an einer Außenwand (160) einer Nachbehandlungsvorrichtung (20),
Verwenden von mindestens einem DEF-Einspritzrohr (22) der Elektrosprayvorrichtung zum Einspritzen von DEF in die Nachbehandlungsvorrichtung (100), wobei das mindestens eine DEF-Einspritzrohr (22) als eine erste Elektrode ausgestaltet ist;
Erzeugen eines elektrischen Feldes zwischen der ersten Elektrode und einer zweiten Elektrode (24) und
Einspritzen eines Sprühstrahls des DEF, der aus dem mindestens einen DEF-Einspritzrohr (22) und durch das elektrische Feld in einen Strom von Abgasen tritt, der durch die Nachbehandlungsvorrichtung (100) strömt,
wobei der DEF-Injektor ferner ein Gehäuse (20) umfasst und
die Elektrosprayvorrichtung (20) innerhalb des Gehäuses (12) enthalten ist.

12. Verfahren nach Anspruch 11, ferner umfassend:
Pumpen des DEF aus einem DEF-Behälter in das mindestens eine DEF-Einspritzrohr (22).

13. Verfahren nach einem der Ansprüche 11 oder 12, wobei die zweite Elektrode mit dem mindestens einen DEF-Einspritzrohr (11) gekoppelt/integriert oder proximal zu diesem angeordnet ist.

14. Verfahren nach einem der Ansprüche 11 bis 13, wobei die erste und die zweite Elektrode (22, 24) dazu ausgestaltet sind, dass das DEF aus dem mindestens einen DEF-Einspritzrohr (13) und durch eine Öffnung (28) in der zweiten Elektrode (24) strömt.

15. Verfahren nach einem der Ansprüche 11 bis 14, ferner umfassend:
Verwenden einer Düse, um einen Strom des DEF zu formen, der aus dem mindestens einen DEF-Einspritzrohr austritt.

## Revendications

1. Injecteur de fluide d'échappement diesel (FED) (10), l'injecteur de FED (10) configuré pour être fixé à une paroi externe (160) d'un appareil de post-traitement (100) pour un moteur diesel en amont d'un dispositif de réduction catalytique sélective (120), l'injecteur de FED (10) comprenant :
un appareil d'électropulvérisation (20) comprenant :
un tuyau d'injection de FED (22) configuré pour fournir une première électrode ;
une deuxième électrode (24) espacée d'une sortie du tuyau d'injection de FED (22),
l'appareil d'électropulvérisation (20) configuré pour fournir un champ électrique entre la première électrode et la deuxième électrode (24) pour l'atomisation du FED injecté par l'injecteur de FED (10) ;
**caractérisé en ce que**
l'injecteur de FED comprend en outre un logement (20),
dans lequel l'appareil d'électropulvérisation (20) est contenu à l'intérieur du logement (12), et
l'appareil d'électropulvérisation (20) est fourni en tant que partie de l'injecteur de FED (10).

2. Injecteur de FED selon la revendication 1, dans lequel
la deuxième électrode comprend une ouverture interne alignée avec la sortie du tuyau d'injection de FED, l'injecteur de FED configuré pour injecter du FED à travers l'ouverture interne dans la deuxième électrode.

3. Injecteur de FED selon la revendication 2, dans lequel
la deuxième électrode (22) est une électrode de type plaque, et/ou la deuxième électrode (22) est une plaque en forme de disque circulaire et/ou la deuxième électrode est annulaire.

4. Injecteur de FED selon la revendication 2 ou la revendication 3, dans lequel
l'ouverture interne (28) à travers la deuxième électrode est elliptique et/ou l'ouverture interne (28) à travers la deuxième électrode est un trou circulaire.

5. Injecteur de FED selon l'une quelconque des revendications précédentes dans lequel,
l'appareil d'électropulvérisation (20) est configuré pour fournir un champ électrique et la deuxième électrode (24) est espacée de la première électrode (22) de telle sorte qu'un rapport opérationnel allant jusqu'à 5 kV/mm est fourni.

6. Injecteur de FED selon l'une quelconque des revendications précédentes, dans lequel le tuyau d'injection de FED (22) est formé à partir d'une pluralité de tuyaux.

7. Ensemble d'injecteur de FED comprenant :
un injecteur de fluide FED (10) selon l'une quelconque des revendications précédentes ; et
une source de tension (32) connectée entre les première et deuxième électrodes (22, 24) de l'appareil d'électropulvérisation (20),
dans lequel éventuellement la source de tension (32) comprend une bobine d'allumage et/ou la source de tension est configurée pour fournir une tension d'au moins 2 kV et allant jusqu'à 200 kV entre les première et deuxième électrodes.

8. Appareil d'alimentation en FED comprenant :
un injecteur de FED (10) selon l'une quelconque des revendications 1 à 6, ou un ensemble d'injecteur de FED selon la revendication 7 ; et
une pompe pour pomper du fluide FED à partir d'un conteneur de stockage de FED vers l'injecteur de fluide FED.

9. Appareil d'alimentation en FED selon la revendication 8 dans lequel
la pompe est configurée pour fournir une pression de FED comprise entre 0 et 5 bars dans le tuyau d'injection de FED.

10. Kit de pièces pour rétromontage d'un injecteur de FED (10) selon l'une quelconque des revendications 1 à 6, ensemble d'injecteur de FED selon la revendication 7, ou appareil d'alimentation en FED selon la revendication 8 ou 9 en amont d'un dispositif de réduction catalytique sélective dans un moteur diesel.

11. Procédé pour injecter un fluide d'échappement diesel (FED) dans un appareil de post-traitement (100) pour un moteur diesel en amont d'un dispositif de réduction catalytique sélective (120), comprenant :
le montage d'un appareil d'électropulvérisation (20) sur une paroi externe (160) d'un appareil de post-traitement (20),
l'utilisation d'au moins un tuyau d'injection de FED (22) de l'appareil d'électropulvérisation pour injecter du FED dans l'appareil de post-traitement (100), dans lequel l'au moins un tuyau d'injection de FED (22) est configuré comme une première électrode ;
la génération d'un champ électrique entre la première électrode et une deuxième électrode (24) ; et
l'injection d'une pulvérisation du FED passant à l'extérieur de l'au moins un tuyau d'injection de FED (22) et à travers le champ électrique dans un écoulement de gaz d'échappement s'écoulant à travers l'appareil de post-traitement (100),
dans lequel l'injecteur de FED comprend en outre un logement (20), et
l'appareil d'électropulvérisation (20) est contenu à l'intérieur du logement (12).

12. Procédé selon la revendication 11, comprenant en outre :
le pompage du FED d'un réservoir de FED vers l'au moins un tuyau d'injection de FED (22).

13. Procédé selon les revendications 11 ou 12, dans lequel la deuxième électrode est couplée/intégrée avec ou disposée à proximité de l'au moins un tuyau d'injection de FED (22).

14. Procédé selon l'une quelconque des revendications 11 à 13, dans lequel les première et deuxième électrodes (22, 24) sont configurées pour assurer que le FED s'écoule hors de l'au moins un tuyau d'injection de FED (22) et à travers une ouverture (28) dans la deuxième électrode (24).

15. Procédé selon l'une quelconque des revendications 11 à 14 comprenant en outre :
l'utilisation d'une buse pour former un flux du FED passant à l'extérieur de l'au moins un tuyau d'injection de FED.
